# EUROPEAN PATENT APPLICATION

(11) **EP 3 225 737 A1**
(43) Date of publication of application: **04.10.2017**
(21) Application number: 15863313.1
(22) Date of filing: 29.10.2015
(51) Int. Cl.: D21H 27/00, C03B 40/033

(54) **WOOD PULP FOR GLASS PLATE INTERLEAVING PAPER, AND GLASS PLATE INTERLEAVING PAPER**

(30) Priority: 25.11.2014 JP 2014238268
(71) Applicant: Tokushu Tokai Paper Co., Ltd., Shimada-shi, Shizuoka 427-8510 (JP)
(72) Inventor: NAITOH, Hideya, Shizuoka 411-8750 (JP); SUZUKI, Yukie, Shizuoka 411-8750 (JP)
(74) Representative: Novitas Patent AB
(86) International application number: PCT/JP2015/080591
(87) International publication number: WO 2016/084547

(57) **Abstract**

The present invention relates to wood pulp for glass plate-interleaving paper in which after application of a colorant or a color former to a surface of wood pulp, non-pigmented or non-colored discontinuous regions having a diameter of 30 µm or more exist on the surface of the wood pulp, in a specified rate, as well as, glass plate-interleaving paper formed from the wood pulp as a raw material, in which after application of a colorant or a color former to a surface of interleaving paper, non-pigmented or non-colored discontinuous regions having a diameter of 30 µm or more exist on the surface of the interleaving paper, in a specified rate. In accordance with the present invention, interleaving paper in which contamination, on the surfaces of glass plates for use as substrate materials for flat panel displays for which a high degree of cleanliness and high quality without damage are required, can be limited to a problem-free level in practice, as well as wood pulp for the interleaving paper mentioned above can be provided.

## Description

### TECHNICAL FIELD

The present invention relates to package paper for packaging glass plates and interleaving paper to be inserted between glass plates, used in the process of storing and transporting glass plates for use in flat panel displays such as liquid crystal displays, plasma displays, organic electroluminescence (organic EL) displays and the like, in a laminated state, and also relates to wood pulp for use in manufacturing paper mentioned above.

### BACKGROUND ART

In general, during the course of storage of glass plates for flat panel displays in a laminated state, or during the course of transporting them by trucks and the like, paper which is so-called interleaving paper has been inserted between glass plates in order to prevent occurrences of abrasion by contacting glass plates on impact or prevent contamination of the surface of glass plates.

Glass plates for flat panel displays are used for high-definition displays, which are different from common architectural glass plates, vehicular glass plates, and the like. For this reason, the surfaces of glass plates for flat panel displays require maintenance of a clean surface so that contamination of the glass surface due to impurities contained on the surface of paper is greatly reduced, and require having a superior flatness for a fast-response property or wide viewing angle.

Some types of interleaving paper for such a usage, for example, interleaving paper in which cracking of glass plates or surface abrasion can be prevented, and interleaving paper in which the surfaces of glass plates are not contaminated, have been proposed. For example, Patent Document 1 discloses a method of forming a fluorine coating film on the surface of interleaving paper. In addition, Patent Document 2 discloses interleaving paper to which a foamed sheet made of a polyethylene-based resin and a film made of a polyethylene-based resin are applied. Patent Document 3 discloses interleaving paper for glass plates, which is formed from pulp containing 50% by mass or more of bleached chemical pulp, and includes a specific alkylene oxide adduct and a water-soluble polyether-modified silicone. In addition, Patent Document 4 discloses interleaving paper for glass plates in which a resin content in paper is specified, and a raw material selected in view of contamination of the surface of glass is used.

However, the interleaving paper mentioned above could not completely prevent contamination of the surfaces of glass plates for flat panel displays. In some cases, a failure rate of glass plates may be actually increased due to contamination of the surfaces of glass plates for various reasons.

In particular, in view of profitability, recently an increased yield is required in the process of manufacturing flat panel displays and the like, and methods to prevent contamination of the surfaces of glass plates for flat panel displays are important.

Therefore, limiting of an amount of silicone contained in glass plate-interleaving paper is described in Patent Document 5.

### Prior Art Documents

### Patent Documents

Patent Document 1: Japanese Unexamined Patent Application, First Publication No. 2012-188785
Patent Document 2: Japanese Unexamined Patent Application, First Publication No. 2010-242057
Patent Document 3: Japanese Unexamined Patent Application, First Publication No. 2008-208478
Patent Document 4: Japanese Unexamined Patent Application, First Publication No. 2006-44674
Patent Document 5: PCT International Publication No. WO 2014/104187

### DISCLOSURE OF INVENTION

### Technical Problems

However, in some cases, it may be difficult to reduce contamination derived from silicone on the surfaces of glass plates to a problem-free level in practice only by limiting the total amount of silicone contained in glass plate-interleaving paper.

The present invention has an object to provide interleaving paper in which contamination, on the surfaces of glass plates for use as substrate materials for flat panel displays for which a high degree of cleanliness and high quality without damage are required, can be limited to a problem-free level in practice, and to provide wood pulp for the interleaving paper mentioned above.

### Technical Solution

For example, it is known that if the surface of a glass plate is contaminated at the time of manufacturing a color filter substrate in an array process, which is one of the processes of manufacturing TFT liquid crystal displays, a problem such as disconnection or the like occurs. A color filter substrate is manufactured by forming a thin film such as a semiconductor film, an ITO film (transparent conductive film), an insulating film, an aluminum metal film or the like on a glass plate by means of sputtering, vacuum deposition or the like. If contaminants exist on the surface of a glass plate, disconnection occurs in a circuit pattern formed from a thin film or short circuit caused by defects of an insulating film occurs. In addition, during manufacture of a color filter substrate, a pattern is formed on a glass plate by means of photolithography. If contaminants are present on the surface of the glass plate at the time of resist application in the aforementioned process, a pinhole is formed on the resist film after exposure or development, and as a result, disconnection or short circuit occurs. The same problems as described above are confirmed in the manufacture of organic EL displays. An organic EL display is manufactured by forming a thin film such as an ITO positive electrode, an organic emitting layer, a negative electrode and the like on a glass plate by means of sputtering, vapor deposition, printing or the like. For this reason, if a contaminant inhibiting the formation of a thin film exists on the surface of a glass plate, a problem of becoming non-luminescent occurs.

It was previously difficult to specify a causality of such a contamination of a glass plate. It has been revealed, however, in research carried out by the inventors of the present application that the causality is a hydrophobic substance such as silicone contained in glass plate-interleaving paper.

Therefore, setting the total amount of hydrophobic substances in wood pulp which is used in the manufacture of interleaving paper for glass plates (hereinafter, also referred to as "glass plate-interleaving paper") to a specified amount or less, and setting the total amount of hydrophobic substances contained in interleaving paper for glass plates to a specified amount or less, are considered. However, in some cases, it may be difficult to reduce contamination derived from hydrophobic substances on the surfaces of glass plates to a problem-free level in practice only by limiting the total amount of hydrophobic substances.

As a result of diligent studies, the inventors of the present application discovered that the problems mentioned above can be overcome by setting the number of problematic hydrophobic substances which exist on the surface of glass plate-interleaving paper or are contained in wood pulp used in the manufacture of glass plate-interleaving paper to a specified amount or less, thus completing the present invention.

Hydrophobic substances repel a colorant or a color former. For this reason, when a colorant or a color former is applied to glass plate-interleaving paper or paper manufactured from wood pulp for glass plate-interleaving paper, the hydrophobic substances existing on the surface of the aforementioned paper or interleaving paper repel the colorant or the color former, and regions where the hydrophobic substances exist are not pigmented or not colored. Therefore, according to the present invention, hydrophobic substances contained in wood pulp for glass plate-interleaving paper or dotted on the surface of glass plate-interleaving paper can be recognized based on the existence of non-pigmentation or non-coloration on the surface of glass plate-interleaving paper or on the surface of paper for use in inspection manufactured from the wood pulp.

In the present invention, by limiting the number of regions where problematic hydrophobic substances recognized as described above exist, contamination on the surface of a glass plate, derived from the hydrophobic substances, can be reduced to a problem-free level in practice.

A first aspect of the present invention relates to wood pulp for glass plate-interleaving paper wherein non-pigmented or non-colored discontinuous regions having a diameter of 30 µm or more, which are obtained after a colorant or a color former is applied to the surface of wood pulp, exist on the surface of the aforementioned wood pulp in an amount of 1000 or less regions per 1000 m², preferably 500 or less regions per 1000 m², more preferably 300 or less regions per 1000 m², even more preferably 150 or less regions per 1000 m², and even more preferably 130 or less regions per 1000 m².

A second aspect of the present invention relates to wood pulp for glass plate-interleaving paper wherein after a colorant or a color former is applied to the surface of hand-made paper having a thickness of 230 µm and manufactured from the aforementioned wood pulp by a method in conformity with JIS P 8222, non-pigmented or non-colored discontinuous regions having a diameter of 30 µm or more exist on the surface of the hand-made paper in an amount of 50 or less regions per 1000 m², preferably 30 or less regions per 1000 m², more preferably 20 or less regions per 1000 m², and even more preferably 10 or less regions per 1000 m².

The colorant mentioned above is preferably an aqueous dye.

The discontinuous regions mentioned above can contain hydrophobic substances. The hydrophobic substances can contain silicone. The silicone mentioned above is preferably a silicone oil. The silicone oil mentioned above is preferably a dimethylpolysiloxane.

The glass plate mentioned above (glass plate used with the glass plate interleaving paper) is preferably one for use in a display. In particular, the display is preferably a TFT liquid crystal display or an organic EL display.

A third aspect of the present invention relates to glass plate-interleaving paper which uses wood pulp as a raw material, wherein non-pigmented or non-colored discontinuous regions having a diameter of 30 µm or more, which are obtained after a colorant or a color former is applied to the surface of glass plater-interleaving paper, exist on the surface of the interleaving paper mentioned above in an amount of 15 or less regions per 1000 m², preferably 12 or less regions per 1000 m², more preferably 10 or less regions per 1000 m², and even more preferably 8 or less regions per 1000 m².

The glass colorant mentioned above is preferably an aqueous dye.

The discontinuous regions mentioned above can contain hydrophobic substances. The hydrophobic substances can contain silicone. The silicone mentioned above is preferably a silicone oil. The silicone oil mentioned above is preferably a dimethylpolysiloxane.

The glass plate mentioned above (glass plate used with the glass plate interleaving paper) is preferably one for use in a display, and in particular, the display is preferably a TFT liquid crystal display or an organic EL display.

In addition, the present invention also relates to a laminate of glass plates, and the aforementioned glass plate-interleaving paper containing the aforementioned wood pulp according to the first or second aspect and/or the aforementioned interleaving paper for glass plates according to the third aspect.

Furthermore, the present invention also relates to use of the aforementioned wood pulp according to the first or second aspect of the present invention for the manufacture of glass plate-interleaving paper, and in particular, glass plate-interleaving paper according to the third aspect of the present invention.

In addition, the present invention also relates to a method for protecting glass plates, including a step of arranging the glass plate-interleaving paper according to the third aspect between the glass plates.

A fourth aspect of the present invention relates to an inspection method of glass plate-interleaving paper or wood pulp for glass plate-interleaving paper, including the steps of:
applying a colorant or a color former to wood pulp for glass plate-interleaving paper or to glass plate-interleaving paper;
counting the number of non-pigmented or non-colored discontinuous regions having a diameter of 30 µm or more which exist on the surface of the wood pulp or the paper mentioned above after the aforementioned application;
determining a rate of existence (distribution) of the non-pigmented or non-colored discontinuous regions, based on the number of the non-pigmented or non-colored discontinuous regions and a surface area of the wood pulp for glass plate-interleaving paper or a surface area of the glass plate-interleaving paper; and
screening wood pulp for glass plate-interleaving paper in which the rate of existence of the non-pigmented or non-colored discontinuous regions is 1000 or less regions per 1000 m², preferably 500 or less regions per 1000 m², more preferably 300 or less regions per 1000 m², even more preferably 150 or less regions per 1000 m², and even more preferably 130 or less regions per 1000 m², or screening glass plate-interleaving paper in which the rate of existence of the non-pigmented or non-colored discontinuous regions is 15 or less regions per 1000 m², preferably 12 or less regions per 1000 m², more preferably 10 or less regions per 1000 m², and even more preferably 8 or less regions per 1000 m².

### Effects of the Invention

The glass plate-interleaving paper formed from wood pulp of the present invention, as well as interleaving paper for glass plates of the present invention can control or inhibit the transfer of hydrophobic substances such as silicone to glass plates. By controlling or inhibiting the transfer of hydrophobic substances to glass plates as described above, circuit disconnection of a color film or the like in a process of manufacturing a TFT liquid crystal display and the like can be prevented.

In the present invention, not by setting the total amount of hydrophobic substances in wood pulp used in the manufacture of glass plate-interleaving paper or the total amount of hydrophobic substances in glass plate-interleaving paper to a specified amount or less, but by setting the number of regions including problematic hydrophobic substances which exist on the surface of glass plate-interleaving paper or wood pulp to a specified amount or less, spots of hydrophobic substances which may transfer to glass plates can be controlled in the individual levels, and contamination derived from hydrophobic substances on the surfaces of glass plates can be reduced to a problem-free level in practice.

In addition, according to the present invention, hydrophobic substance regions existing on pulp for glass plate-interleaving paper itself, inspection paper or glass plate-interleaving paper produced from the aforementioned wood pulp can be easily recognized as non-pigmented or non-colored regions by subjecting the aforementioned wood pulp, inspection paper, or interleaving paper to a treatment with a colorant or a color former. For this reason, glass plate-interleaving paper or wood pulp for glass plate-interleaving paper which meets criteria for selection can be easily screened. Therefore, an inspection method of the present invention can be easily carried out by, for example, visual check.

### Modes for Carrying Out the Invention

When interleaving paper is used for glass plates, hydrophobic substances such as silicone in the interleaving paper tend to transfer to the glass plates. In particular, it has been revealed in the present invention that when interleaving paper manufactured from wood pulp in which the number of hydrophobic substance regions having a diameter of 30 µm or more existing on the surface of the wood pulp exceeds 1000 regions per 1000 m², or interleaving paper in which the number of hydrophobic substance regions having a diameter of 30 µm or more existing on the surface of the interleaving paper exceeds 15 regions per 1000 m² is used for glass plates, the mass of the hydrophobic substances transferring to the glass plates increases, and as a result, problems at the time of forming a panel are caused thereby.

Therefore, one mode of wood pulp for glass plate-interleaving paper of the present invention provides a quality in which non-pigmented or non-colored discontinuous regions having a diameter of 30 µm or more exist on the surface of the wood pulp after application of a colorant or a color former thereto in an amount of 1000 or less regions per 1000 m². Thereby, the number of substantially problematic regions of hydrophobic substances such as silicone existing on the surface of glass plate-interleaving paper manufactured from the wood pulp of the present invention can be limited to 15 regions per 1000 m². In addition, another mode of wood pulp for glass plate-interleaving paper of the present invention provides a quality in which after application of a colorant or a color former to the surface of hand-made paper having a thickness of 230 µm and manufactured from the aforementioned wood pulp by a method in conformity with JIS P 8222, non-pigmented or non-colored discontinuous regions having a diameter of 30 µm or more exist on the surface of hand-made paper in an amount of 50 or less regions per 1000 m². In addition, glass plate-interleaving paper of the present invention is interleaving paper for glass plates manufactured from the wood pulp, in which after application of a colorant or a color former to the surface of the glass plate-interleaving paper, non-pigmented or non-colored discontinuous regions having a diameter of 30 µm or more exist on the surface of interleaving paper in an amount of 15 or less regions per 1000 m².

In the present invention, the "surface" of interleaving paper means any external surface of interleaving paper, and for example, includes at least one part of not only one external surface (obverse), but also the other external surface (reverse). Therefore, a colorant or a color former may be applied to either the obverse or reverse external surface, or alternatively, a colorant or a color former may be applied to both the obverse and reverse external surfaces. In addition, a colorant or a color former may be applied to the entire surface of the obverse and/or reverse external surface of interleaving paper, or alternatively, a colorant or a color former may be applied to a part of the obverse and/or reverse external surface of interleaving paper.

A form of wood pulp for glass plate-interleaving paper of the present invention is not particularly limited, and wood pulp can be in any form of a sheet, a block, or flakes. Pulp in the form of a sheet can be obtained, for example, by using a pulp machine equipped with four sections of a wire section, a press section, a dryer section, and a finishing section. In the wire section, pulp fibers are subjected to paper-making by means of a Fourdrinier, a vacuum filter or the like. In the press section, dehydration is carried out by means of press rolls. In the dryer section, drying is carried out by means of a cylinder dryer, a Flakt dryer, or the like. Finally, both ends of the pulp in the form of a sheet are cut off, and the sheet is taken up into a roll. Such a method is described in detail in "Paper pulp manufacturing technique series" or "Manufacture of paper pulp; Technical book" published by the Japan Technical Association of the Pulp and Paper Industry. Pulp in the form of a block can be manufactured by, for example, laminating the aforementioned pulp in the form of a sheet. In addition, pulp in the form of flakes can be manufactured by, for example, pulverizing the aforementioned pulp in the form of a sheet.

In the present invention, the "surface" of wood pulp means any external surface of wood pulp. For example, in the case of wood pulp in the form of a sheet, the surface means at least one part of not only one external surface (obverse), but also the other external surface (reverse). On the other hand, in the case of wood pulp in the form of a block, and in particular, in the form of a cubic, the surface means any external surface thereof and means at least one part of the external surfaces including 6 external surfaces (top face, side faces, and rear face). Therefore, in the case of wood pulp in the form of a sheet, a colorant or a color former may be applied to either the obverse or reverse external surface, or alternatively, a colorant or a color former may be applied to both the obverse and reverse external surfaces. In addition, a colorant or a color former may be applied to the entire surface of the obverse and/or reverse external surface of wood pulp in the form of a sheet, or alternatively, a colorant or a color former may be applied to a part of the obverse and/or reverse external surface of wood pulp in the form of a sheet.

A thickness of the aforementioned pulp in the form of sheet preferably ranges from 0.7 to 1.5 mm, more preferably ranges from 0.9 to 1.3 mm, and even more preferably ranges from 1.0 to 1.2 mm.

A basis weight of the aforementioned pulp in the form of a sheet preferably ranges from 400 to 1300 g/m², more preferably ranges from 500 to 1200 g/m², even more preferably ranges from 500 to 1100 g/m², even more preferably ranges from 500 to 1000 g/m², and even more preferably ranges from 700 to 1000 g/m².

After a colorant or a color former is applied to wood pulp for glass plate-interleaving paper, non-pigmented or non-colored discontinuous regions having a diameter of 30 µm or more exist on the surface of the wood pulp in an amount of preferably 500 or less regions per 1000 m², more preferably 300 or less regions per 1000 m², even more preferably 150 or less regions per 1000 m², even more preferably 130 or less regions per 1000 m², even more preferably 100 or less regions per 1000 m², and in particular, preferably 50 or less regions per 1000 m². After a colorant or a color former is applied to the surface of hand-made paper having a thickness of 230 µm which is manufactured from the wood pulp for glass plate-interleaving paper according to the present invention by means of a method in conformity with JIS P 8222, non-pigmented or non-colored discontinuous regions having a diameter of 30 µm or more exist on the surface of the hand-made paper in an amount of preferably 30 or less regions per 1000 m², more preferably 20 or less regions per 1000 m², even more preferably 10 or less regions per 1000 m², even more preferably 5 or less regions per 1000 m², even more preferably 3 or less regions per 1000 m², and in particular, preferably 1 or less regions per 1000 m². In addition, the number of the aforementioned non-pigmented or non-colored discontinuous regions with respect to a weight of the wood pulp for glass plate-leaving paper is preferably 10 or less (regions) per 10 kg, more preferably 6 or less (regions) per 10 kg, even more preferably 4 or less (regions) per 10 kg, even more preferably 3 or less (regions) per 10 kg, even more preferably 2 or less (regions) per 10 kg, and in particular, preferably 1 or less (regions) per 10 kg. Here, "weight" indicates a weight of air-dried pulp.

In addition, non-pigmented or non-colored discontinuous regions having a diameter of 30 µm or more of the aforementioned glass plate-interleaving paper exist on the surface of the paper in an amount of preferably 12 or less regions per 1000 m², more preferably 10 or less regions per 1000 m², even more preferably 8 or less regions per 1000 m², even more preferably 5 or less regions per 1000 m², even more preferably 3 or less regions per 1000 m², and in particular, preferably 1 or less regions per 1000 m². In addition, the number of the aforementioned non-pigmented or non-colored discontinuous regions with respect to a weight of the glass plate-leaving paper is preferably 4 or less (regions) per 10 kg, more preferably 3 or less (regions) per 10 kg, even more preferably 2 or less (regions) per 10 kg, even more preferably 1 or less (regions) per 10 kg, even more preferably 0.5 or less (regions) per 10 kg, and in particular, preferably 0.1 or less (regions) per 10 kg. Here, "weight" indicates a weight of interleaving paper in a state of containing 10% by weight of moisture.

"Non-pigmented discontinuous regions" and "non-colored discontinuous regions" (they are referred to as "non-pigmented or non-colored discontinuous regions" in combination) in the present invention are respectively regions which are not pigmented even if a colorant is applied thereto, and regions which are not colored even if a color former is applied thereto, and mean that a non-pigmented or non-colored discontinuous region is comparted from another non-pigmented or non-colored discontinuous region. Therefore, plural non-pigmented or non-colored discontinuous regions can exist. More particularly, non-pigmented or non-colored discontinuous regions can be scattered in the form of dots or spots.

The form of the non-pigmented or non-colored discontinuous regions is not limited, and can be a circular form, an ellipsoidal form, a square form, or the like. A circular form or an ellipsoidal form is preferred.

In the present invention, "diameter" of the discontinuous region means a circle area-equivalent diameter (a diameter of a circle having the same area as that of the discontinuous region). The diameter of the aforementioned non-pigmented or non-colored discontinuous regions is preferably 25 µm or more, more preferably 20 µm or more, even more preferably 15 µm or more, even more preferably 10 µm or more, even more preferably 5 µm or more, even more preferably 1 µm or more, and in particular, preferably 0.5 µm or more. In the case of the aforementioned non-pigmented or non-colored discontinuous regions being in the form of a circle, the diameter thereof corresponds to the "diameter". On the other hand, in the case of the aforementioned non-pigmented or non-colored discontinuous regions being in the form of a non-circle, a circle area-equivalent diameter (a diameter of a circle having the same area as that of the discontinuous region) is preferably 25 µm or more, more preferably 20 µm or more, even more preferably 15 µm or more, even more preferably 10 µm or more, even more preferably 5 µm or more, even more preferably 1 µm or more, and in particular, preferably 0.55 µm or more. An area of the aforementioned non-pigmented or non-colored discontinuous region can be measured by microscopy.

The diameter of the aforementioned non-pigmented or non-colored discontinuous regions is preferably 10 mm or less, more preferably 5 mm or less, even more preferably 3 mm or less, even more preferably 1 mm or less, even more preferably 500 µm or less, even more preferably 100 µm or less, and in particular, preferably 50 µm or less. In the case of the aforementioned non-pigmented or non-colored discontinuous regions being in the form of a circle, the diameter thereof is preferably 10 mm or less, more preferably 5 mm or less, even more preferably 3 mm or less, even more preferably 1 mm or less, even more preferably 500 µm or less, even more preferably 100 µm or less, and in particular, preferably 50 µm or less. On the other hand, in the case of the aforementioned non-pigmented or non-colored discontinuous regions being in the form of a non-circle, a circle area-equivalent diameter is preferably 10 mm or less, preferably 5 mm or less, more preferably 3 mm or less, even more preferably 1 mm or less, even more preferably 500 µm or less, even more preferably 100 µm or less, and in particular, preferably 50 µm or less.

It is preferable that non-pigmented or non-colored discontinuous regions having a diameter which exceeds 10 mm not exist on the surface of wood pulp for glass plate-interleaving paper of the present invention or glass plate-interleaving paper of the present invention.

The aforementioned colorant or color former preferably lacks affinity with hydrophobic substances such as silicone and the like. Therefore, the aforementioned colorant or color former is preferably hydrophilic.

The aforementioned colorant is not particularly limited as long as a material can color wood pulp or interleaving paper. For example, dye, pigment, and a mixture thereof can be used therefor.

Any dye can be used. Dye is preferably hydrophilic, and aqueous dye is more preferable.

In the present invention, a mode for dyeing (coloring) by means of aqueous dye is not particularly limited. Aqueous dye is hydrophilic and is soluble in water. As aqueous dye, any one can be used, and for example, acidic dye, direct dye, basic dye, and the like may be mentioned. Examples of aqueous dye include C.I. (color index) Direct Black 9, 17, 19, 22, 32, 38, 51, 56, 62, 69, 71, 77, 80, 91, 94, 97, 105, 108, 112, 113, 114, 117, 118, 121, 122, 125, 132, 146, 154, 166, 168, 173, and 199, C.I. Direct Violet 7, 9, 47, 48, 51, 66, 90, 93, 94, 95, 98, 100, and 101, C.I. Direct Red 23, 83, and 227, C.I. Direct Yellow 8, 9, 11, 12, 27, 28, 29, 33, 35, 39, 41, 44, 50, 53, 58, 59, 68, 86, 87, 93, 95, 96, 98, 100, 106, 108, 109, 110, 130, 132, 144, 161, and 163, C.I. Direct Blue 1, 10, 15, 22, 25, 55, 67, 68, 71, 76, 77, 78, 80, 84, 86, 87, 90, 98, 106, 108, 199, 201, 202, 236, 237, 244, 251, and 280, C.I. Acid Black 7, 24, 29, 31, 48, 52, and 94, C.I. Acid Violet 5, 34, 43, 47, 48, 90, and 103, C.I. Acid Red 87, 186, 254, and 289, C.I. Acid Yellow 17, 19, 23, 25, 39, 40, 42, 44, 49, 50, 61, 110, 174, and 218, C.I. Acid Blue 9, 25, 40, 41, 62, 72, 76, 78, 80, 82, 106, 112, 120, 205, 230, 234, 271, and 280, and the like.

Any pigments can be used. As pigments, inorganic pigments, organic pigments, or a mixture thereof can be used. Hydrophilic pigments are preferable, and water-dispersible pigments are more preferable.

Examples of inorganic pigments include, for example, titanium dioxide, zinc white (zinc oxide), iron oxide, chromium oxide, iron black, cobalt blue, alumina white, iron oxide yellow, viridian, zinc sulfide, lithopone, vermilion, cadmium red, chrome yellow, molybdate orange, zinc chromate, strontium chromate, white carbon, clay, talc, ultramarine blue, precipitated barium sulfate, baryta powder, calcium carbonate, white lead, ferrocyanide (Prussian blue), phosphate (manganese violet), carbon black, and the like.

Examples of organic pigments include, for example, rhodamine lake, methyl violet lake, quinoline yellow lake, malachite green lake, alizarin lake, Carmine 6B, Lake Red C, disazoyellow, Lake Red 4R, Cromophtal Yellow 3G, Cromophtal Scarlet RN, nickel azoyellow, Permanent Orange HL, phthalocyanine blue, phthalocyanine green, flavanthrone yellow, Thioindigo Bordeaux, perinone red, dioxazine violet, quinacridone red, Naphthol Yellow S, Pigment Green B, lumogen yellow, signal red, alkali blue, aniline black, and the like.

A color former has a property of developing color by irradiation of electromagnetic waves or the like, and is not particularly limited as long as wood pulp or interleaving paper can be colored thereby. For example, a color former for causing color-development by irradiation of electromagnetic wave, a color former for causing color-development by contacting with a chemical substance, or a mixture thereof can be used.

Any color former for developing color by means of irradiation of electromagnetic waves can be used. A fluorescent color former which develops fluorescent color by means of irradiation of ultraviolet ray, infrared ray, or the like is preferable. As a fluorescent color former, examples described below can be used.

### <UV fluorescent color former>

Inorganic compounds such as Ca₂B₅O₃Cl:Eu²⁺, CaWO₄, ZnO:Zn₂SiO₄:Mn, Y₂O₂S:Eu, ZnS:Ag, and YVO₄:Eu, or alternatively, organic compounds such as diaminostilbene-based ones such as C.I. 40600 Fluorescent Brightening Agent 30, C.I. 40620 Fluorescent Brightening Agent 32, C.I. 40605 FBA 34, and C.I. 40630 FBA 1, and thiazole-based ones such as C.I. 49015 FBA 41, and the like.

### <IR fluorescent color former>

Inorganic compounds such as YF₃:YB, Er, ZnS:CuCo, LiNd_{0.9}Yb_{0.1}P₄O₁₂, LiBi_{0.2}Nd_{0.7}Yb_{0.1}P₄O₁₂, and Nd_{0.9}Yb_{0.1}Nd₅(MoO₄)₄.

Any color former which color-forms by contacting with a chemical substance can be used. For example, 3,3-bis(p-dimethylaminophenyl)-6-dimethylaminophthalide (trivial name: crystal violet lactone), 3,3-bis(p-dimethylaminophenyl)-6-diethylaminophthalide, 3,3-bis(p-dimethylaminophenyl)-6-chlorophthalide, 3,3-bis(p-diethylaminophenyl)-6-diethylaminophthalide, 3,3-bis(p-dibutylaminophenyl)phthalide, 3,3-bis(p-dimethylaminophenyl)-6-diethylaminoazaphthalide, 3-diethylamino-6-methyl-7-anilinofluoran, 3-(N-p-tolyl-N-ethylamino)-6-methyl-7-anilinofluoran, 3-N-methyl-N-amylamino-6-methyl-7-anilinofluoran, 3-diethylamino-7-(o-chloroanilino)fluoran, 3-dibutylamino-7-(o-chloroanilino)fluoran, 3-diethylamino-6-methyl-7-anilinofluoran, 6'-bromo-3'-methoxy-benzoindolino-spiropyran, 3-(2'-hydroxy-4'-dimethylaminophenyl)-3-(2'-methoxy-5'-chlorophenyl)-phthalide, or the like becomes chromogenic by means of a reaction with a color developer such as ethyl p-hydroxybenzoate, butyl p-hydroxybenzoate, benzyl p-hydroxybenzoate, 4,4-isopropylidene diphenol, 4,4-isopropylidene bis(2-chlorophenol), 4,4-isopropylidene bis(2-methylphenol), 4,4-isopropylidene bis(2,6-dimethylphenol), 4-hydroxyphenyl-2'-hydroxypenylsulfone, catechol, resorcinol, thymol, fluorochrysin, fluoroglycin carboxylic acid, N,N-diphenylthiourea, N-p-butylphenyl-N'-phenylthiourea, benzoic acid, 4-hydroxy-4'-chlorodiphenylsulfone, bis(4-hydroxyphenyl)sulfide, o-sulfophthalimide, or 5-octyl-o-sulfophthalimide. For this reason, the aforementioned compounds can be used as the color former of the present invention.

Application of the colorant or the color former can be carried out by applying a composition such as a solution or a dispersion which contains the colorant or the color former to wood pulp, or interleaving paper or inspection paper prepared from wood pulp. Alternatively, application of the colorant or the color former may be carried out by immersing wood pulp, or interleaving paper or inspection paper prepared from wood pulp in a composition such as a solution or a dispersion which contains the colorant or the color former. An aqueous dye is preferably applied to wood pulp or interleaving paper or inspection paper prepared from wood pulp. After the aforementioned application or immersion, the wood pulp, or the interleaving paper or inspection paper prepared from wood pulp is preferably dried. A concentration of the colorant or color former in the aforementioned composition is not particularly limited, but preferably ranges from 0.001 to 20% by weight, more preferably ranges from 0.01 to 10% by weight, and even more preferably ranges from 0.1 to 1% by weight.

A colorant or color former is fixed on the surface of wood pulp, or the interleaving paper or inspection paper prepared from wood pulp, due to the aforementioned application. If a hydrophobic substance exists on the surface of the wood pulp, or the interleaving paper or inspection paper prepared from wood pulp, the hydrophobic substance repels the colorant or color former. For this reason, the region where the hydrophobic substance exists is not colored, and becomes a "non-pigmented discontinuous region", or the region where the hydrophobic substance exists is not color-formed, and becomes a "non-colored discontinuous region". In the present invention, hydrophobic substances dotted on the surface of wood pulp, or interleaving paper or inspection paper prepared from wood pulp can be recognized by non-pigmented or non-colored regions existing on the wood pulp, or the interleaving paper or inspection paper prepared from wood pulp. The aforementioned discrimination can be easily carried out visually. In the present invention, non-pigmented or non-colored discontinuous regions preferably contain hydrophobic substances.

The aforementioned hydrophobic substances are not particularly limited as long as the substance repels a colorant or a color former. The hydrophobic substances are preferably nonvolatile, and more preferably selected from aliphatic hydrocarbons, vegetable oils, animal oils, synthetic glycerides, aliphatic alcohols, fatty acids, esters of aliphatic alcohols and/or fatty acids, resins (excluding silicones), and silicones. In particular, the hydrophobic substances even preferably include a silicone or are silicones.

As examples of aliphatic hydrocarbons, mention may be made of, for example, a linear or branched hydrocarbon, and in particular, a mineral oil (liquid paraffin or the like), paraffin, Vaseline, that is, petrolatum, naphthalene, or the like; hydrogenated polyisobutene and decene/butane copolymer such as hydrogenated polyisobutene, isoeicosane, polydecene, or Parleam; as well as a mixture thereof.

As examples of other aliphatic hydrocarbons, mention may be made of C₆ to C₁₆ lower alkanes which are linear or branched, or cyclic in some cases. Particular examples thereof may include hexane, undecane, dodecane, tridecane, and isoparaffin, which include isohexadecane and isodecane.

As examples of vegetable oils, mention may be made of, for example, linseed oil, camellia oil, macadamia nut oil, sunflower oil, apricot oil, soybean oil, arara oil, hazelnut oil, corn oil, mink oil, olive oil, avocado oil, sasanqua oil, castor oil, safflower oil, jojoba oil, almond oil, grape seed oil, sesame oil, peanut oil, and a mixture thereof.

As examples of animal oils, mention may be made of, for example, squalene, perhydrosqualene, and squalane.

As examples of synthetic glycerides, mention may be made of, for example, caprylic/capric triglyceride.

A fatty acid should be in an acidic form (that is, not in the form of a salt in order to avoid formation of a soap), may be saturated or unsaturated, contains 6 to 30 carbon atoms, and in particular, contains 9 to 30 carbon atoms, and is optionally substituted by one or more hydroxyl groups (in particular, 1 to 4 hydroxyl groups). In the case of an unsaturated fatty acid, the compound can contain 1 to 3 conjugated or non-conjugated carbon-carbon double bonds. A fatty acid can be selected from, for example, myristic acid, palmitic acid, stearic acid, behenic acid, oleic acid, linoleic acid, linolenic acid, and isostearic acid.

The term "aliphatic alcohol" means an optionally saturated, and linear or branched C₈ to C₃₀ alcohol, in the present specification, and it is optionally substituted by particularly one or more hydroxyl groups (in particular, 1 to 4 hydroxyl groups).

Among the aliphatic alcohols, a C₁₂ to C₂₂ aliphatic alcohol is preferable, and a C₁₆ to C₁₈ saturated aliphatic alcohol is more preferable. As examples thereof, mention may be made of lauryl alcohol, cetyl alcohol, stearyl alcohol, isostearyl alcohol, oleyl alcohol, behenyl alcohol, undecyl alcohol, myristyl alcohol, and a mixture thereof.

As examples of esters of fatty acids and/or aliphatic alcohols, mention may be made of, in particular, esters of saturated or unsaturated, and linear or branched C₁ to C₂₆ aliphatic mono-acids or poly-acids, and esters of saturated or unsaturated, and linear or branched C₁ to C₂₆ aliphatic monohydric alcohols or polyhydric alcohols. The total number of carbon atoms of the esters is preferably 10 or more.

Resins (excluding silicones) are not particularly limited as long as they are hydrophobic. As examples of a resin, mention may be made of, for example, a thermoplastic resin such as polyolefin, polystyrene, poly(meth)acrylate, polyacrylamide, polyvinyl chloride, polyvinylidene chloride, polyacrylonitrile, polyester, polycarbonate, polyamide, or polyimide, a thermosetting resin such as polyurethane, melamine resin, or urea resin, and a mixture thereof.

As examples of silicones, silicone oils may be mentioned. A silicone oil is hydrophobic, and the molecular structure thereof may be in any form of a cyclic form, a linear form, or a branched form. A kinetic viscosity of a silicone oil at 25°C usually ranges from 0.65 to 100,000 mm²/s, and may range from 0.65 to 10,000 mm²/s.

Examples of a silicone oil include, for example, a linear organopolysiloxane, a cyclic organopolysiloxane, and a branched organopolysiloxane.

Examples of a linear organopolysiloxane, a cyclic organopolysiloxane, and a branched organopolysiloxane include, for example, organopolysiloxanes represented by the following general formulae (1), (2) and (3):

R¹₃SiO-(R¹₂SiO)ₐ-SiR¹₃ (1)

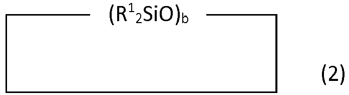

R¹_{(4-c)}Si(OSiR¹₃)_{c} (3)

(wherein
each R¹ is independently a hydrogen atom, a hydroxyl group, or a group selected from a substituted or unsubstituted monovalent hydrocarbon group and an alkoxy group;
a is an integer ranging from 0 to 1,000;
b is an integer ranging from 3 to 100; and
c is an integer ranging from 1 to 4, and is preferably an integer ranging from 2 to 4).

The substituted or unsubstituted monovalent hydrocarbon group is typically a monovalent saturated hydrocarbon group having 1 to 30 carbon atoms, preferably having 1 to 10 carbon atoms, and more preferably having 1 to 4 carbon atoms, which may be substituted or unsubstituted; a monovalent unsaturated hydrocarbon group having 2 to 30 carbon atoms, preferably having 2 to 10 carbon atoms, and more preferably having 2 to 6 carbon atoms, which may be substituted or unsubstituted; and a monovalent aromatic hydrocarbon group having 6 to 30 carbon atoms, and more preferably having 6 to 12 carbon atoms, which may be substituted or unsubstituted.

Examples of a monovalent saturated hydrocarbon group having 1 to 30 carbon atoms include, for example, a linear or branched alkyl group such as a methyl group, an ethyl group, a n-propyl group, an isopropyl group, a n-butyl group, an isobutyl group, a sec-butyl group, a tert-butyl group, a pentyl group, a hexyl group, a heptyl group, an octyl group, a nonyl group, a decyl group or the like, as well as a cycloalkyl group such as a cyclopentyl group, a cyclohexyl group, a cycloheptyl group, a cyclooctyl group or the like.

Examples of a monovalent unsaturated hydrocarbon group having 2 to 30 carbon atoms include, for example, a linear or branched alkenyl group such as a vinyl group, a 1-propenyl group, an allyl group, an isopropenyl group, a 1-butenyl group, a 2-butenyl group, a pentenyl group, a hexenyl group or the like; a cycloalkenyl group such as a cyclopentenyl group, a cyclohexenyl group or the like; a cycloalkenylalkyl group such as a cyclopentenylethyl group, a cyclohexenylethyl group, a cyclohexenylpropyl group, or the like; and an alkynyl group such as an ethynyl group, a propargyl group or the like.

Examples of a monovalent aromatic hydrocarbon group having 6 to 30 carbon atoms include, for example, an aryl group such as a phenyl group, a tolyl group, a xylyl group, a mesityl group or the like. A phenyl group is preferable. The aromatic hydrocarbon group in the specification of the present application includes a group in which an aromatic hydrocarbon and an aliphatic saturated hydrocarbon are combined, in addition to a group consisting of only an aromatic hydrocarbon. Examples of a group in which an aromatic hydrocarbon and an aliphatic saturated hydrocarbon are combined include, for example, an aralkyl group such as a benzyl group, a phenethyl group or the like.

The hydrogen atoms on the aforementioned monovalent hydrocarbon group may be substituted by one or more substituents. The aforementioned substituents can be selected from, for example, a halogen atom (a fluorine atom, a chlorine atom, a bromine atom, and an iodine atom), a hydroxyl group, and an organic group containing a carbinol group, an epoxy group, a glycidyl group, an acyl group, a carboxyl group, an amino group, a methacryl group, a mercapto group, an amide group, an oxyalkylene group, and the like. More particularly, examples thereof include a 3,3,3-trifluoropropyl group, a 3-chloropropyl group, a 3-hydroxypropyl group, a 3-(2-hydroxyethoxy)propyl group, a 3-carboxypropyl group, a 10-carboxydecyl group, a 3-isocyanatepropyl group, and the like.

As an alkoxy group, examples thereof include a methoxy group, an ethoxy group, a propoxy group and the like. A methoxy group or an ethoxy group is preferable, and a methoxy group is more preferable.

More particularly, examples of a linear organopolysiloxane include a dimethylpolysiloxane in which both terminals of the molecular chain are capped with trimethylsiloxy groups (from a dimethylsilicone with a low viscosity such as 2 mPa·s, 6 mPa·s or the like, to a dimethylsilicone with a high viscosity such as 1,000,000 mPa·s or the like), an organohydrogenpolysiloxane, a methylphenylpolysiloxane in which both terminals of the molecular chain are capped with trimethylsiloxy groups, a copolymer of methylphenylsiloxane and dimethylsiloxane in which both terminals of the molecular chain are capped with trimethylsiloxy groups, a diphenylpolysiloxane in which both terminals of the molecular chain are capped with trimethylsiloxy groups, a copolymer of diphenylsiloxane and dimethylsiloxane in which both terminals of the molecular chain are capped with trimethylsiloxy group, trimethylpentaphenyltrisiloxane, phenyl(trimethylsiloxy)siloxane, a methylalkylpolysiloxane in which both terminals of the molecular chain are capped with trimethylsiloxy groups, a copolymer of methylalkylsiloxane and dimethylpolysiloxane in which both terminals of the molecular chain are capped with trimethylsiloxy groups, a copolymer of methyl(3,3,3-trifluoropropyl)siloxane and dimethylsiloxane in which both terminals of the molecular chain are capped with trimethylsiloxy groups, an α,ω-dihydroxypolydimethylsiloxane, an α,ω-diethoxypolydimethylsiloxane, 1,1,1,3,5,5,5-heptamethyl-3-octamethyltrisiloxane, 1,1,1,3,5,5,5-heptamethyl-3-dodecyltrisiloxane, 1,1,1,3,5,5,5-heptamethyl-3-hexadecyltrisiloxane, tristrimethylsiloxymethylsilane, a tristrimethylsiloxyalkylsilane, tetrakistrimethylsiloxysilane, tetramethyl-1,3-dihydroxydisiloxane, octamethyl-1,7-dihydroxytetrasiloxane, hexamethyl-1,5-diethoxytrisiloxane, hexamethyldisiloxane, octamethyltrisiloxane, a higher alkoxy-modified silicone, a higher fatty acid-modified silicone, dimethiconol, and the like.

Examples of a cyclic organopolysiloxane include hexamethylcyclotrisiloxane (D3), octamethylcyclotetrasiloxane (D4), decamethylcyclopentasiloxane (D5), dodecamethylcyclohexasiloxane (D6), 1,1-diethylhexamethylcyclotetrasiloxane, phenylheptamethylcyclotetrasiloxane, 1,1-diphenylhexamethylcyclotetrasiloxane, 1,3,5,7-tetravinyltetramethylcyclotetrasiloxane, 1,3,5,7-tetramethylcyclotetrasiloxane, 1,3,5,7-tetracyclohexyltetramethylcyclotetrasiloxane, tris(3,3,3-trifluoropropyl) trimethylcyclotrisiloxane, 1,3,5,7-tetra(3-methacryloxypropyl) tetramethylcyclotetrasiloxane, 1,3,5,7-tetra(3-acryloxypropyl) tetramethylcyclotetrasiloxane, 1,3,5,7-tetra(3-carboxypropyl) tetramethylcyclotetrasiloxane, 1,3,5,7-tetra(3-vinyloxypropyl) tetramethylcyclotetrasiloxane, 1,3,5,7-tetra(p-vinylphenyl) tetramethylcyclotetrasiloxane, 1,3,5,7-tetra[3-(p-vinylphenyl)propyl]tetramethylcyclotetrasiloxane, 1,3,5,7-tetra(N-acryloyl-N-methyl-3-aminopropyl) tetramethylcyclotetrasiloxane, 1,3,5,7-tetra(N,N-bis(lauroyl)-3-aminopropyl)tetramethylcyclotetrasiloxane, and the like.

Examples of a branched organopolysiloxane include methyltristrimethylsiloxysilane, ethyltristrimethylsiloxysilane, propyltristrimethylsiloxysilane, tetrakistrimethylsiloxysilane, phenyltristrimethylsiloxysilane, and the like.

As a silicone oil in the present invention, dimethylpolysiloxane, diethylpolysiloxane, methylphenylpolysiloxane, a polydimethyl polydiphenylsiloxane copolymer, polymethyl-3,3,3-trifluoropropylsiloxane and the like are preferable. As a silicone in the present invention, dimethylpolysiloxane is typically used.

A silicone oil in the present invention may be a modified silicone oil. Examples of a modified silicone oil include, for example, a polyoxyalkylene-modified silicone oil.

A polyoxyalkylene-modified silicone oil is a silicone oil in which a polyoxyalkylene group is bonded via a silicon-carbon bond in a molecule, preferably exhibits a water-solubility at 25°C, and is more preferably a nonion-based one.

A polyoxyalkylene-modified silicone oil is, in particular, a copolymer between a polyoxyalkylene and a silicone oil formed from a linear or branched siloxane, for example. There are various types thereof. In particular, the silicone oils represented by the following formula (4) are preferable.

R²₃SiO-(R¹₂SiO)_{d}-(R¹ASiO)ₑ-SiR²₃ (4)

(wherein
each R¹ is independently the same as described above,
each R² is independently R¹ or A,
each A is independently a group represented by R³G, in which R³ is a substituted or unsubstituted divalent hydrocarbon group, and G represents a polyoxyalkylene group containing at least one type of an alkylene oxide having 2 to 5 carbon atoms such as ethylene oxide, propylene oxide or the like, d represents an integer ranging from 1 to 500, and
e represents an integer ranging from 1 to 50).

Examples of a substituted or unsubstituted divalent hydrocarbon group include, for example, a linear or branched divalent hydrocarbon group, examples of which include a linear or branched alkylene group having 1 to 30 carbon atoms such as a methylene group, a dimethylene group, a trimethylene group, a tetramethylene group, a pentamethylene group, a hexamethylene group, a heptamethylene group, an octamethylene group, or the like; an alkenylene group having 2 to 30 carbon atoms such as a vinylene group, an allylene group, a butenylene group, a hexenylene group, an octenylene group, or the like; an arylene group having 6 to 30 carbon atoms such as a phenylene group, a diphenylene group or the like; an alkylene arylene group having 7 to 30 carbon atoms such as a dimethylene phenylene group or the like; and a group in which hydrogen atoms binding to carbon atoms of the aforementioned groups are at least partially substituted with a halogen atom such as a fluorine atom or the like, a hydroxyl group, or an organic group containing a carbinol group, an epoxy group, a glycidyl group, an acyl group, a carboxyl group, an amino group, a methacryl group, a mercapto group, an amide group, an oxyalkylene group or the like. The divalent hydrocarbon group is preferably an alkylene group having 1 to 30 carbon atoms, preferably an alkylene group having 1 to 6 carbon atoms, and more preferably an alkylene group having 3 to 5 carbon atoms.

For example, as examples of a polyoxyalkylene-modified silicone oil, the following compounds can be mentioned. 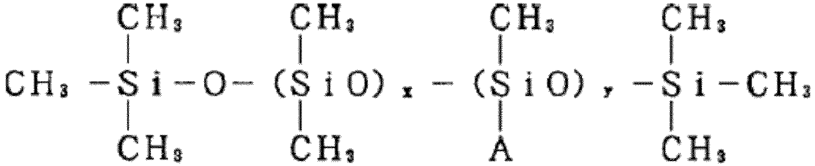 (wherein
x ranges from 20 to 160, y ranges from 1 to 25, and a value of x/y ranges from 50 to 2,
A is, for example, -(CH₂)₃O-(CH₂CH₂O)ₘ-(CH₂CH₂CH₂O)ₙ-R⁴, m ranges from 7 to 40, n ranges from 0 to 40, a value of m + n is at least 1, A may be a graft-polymerized one or a random-polymerized one, and
R⁴ represents a hydrogen atom or the aforementioned substituted or unsubstituted monovalent hydrocarbon group. Preferably, m ranges from 7 to 30 and n ranges from 0 to 30).

In addition, as an example of a modified silicone oil, for example, an aminoalkyl-modified silicone oil may be mentioned.

An aminoalkyl-modified silicone oil is a silicone oil in which an aminoalkyl group is bonded to the molecule via a silicon-carbon bond, and preferably exhibits a viscosity ranging from 10 to 100,000 cs at room temperature, and in particular, 25°C.

As the aforementioned aminoalkylsilicone oil, one in which G is substituted by a formula: -(NR⁴CH₂CH₂)_{z}NR⁴₂ (wherein each R⁴ is independently the same as described above, and z is a number of 0 ≤ z ≤ 4) in the aforementioned formula (4) may be mentioned.

In the present invention, the amount of silicone contained in wood pulp or in glass plate-interleaving paper formed from the aforementioned wood pulp is preferably 0.5 ppm or less, more preferably 0.4 ppm or less, even more preferably 0.3 ppm or less, even more preferably 0.2 ppm or less, and in particular, preferably 0.1 ppm or less, with respect to the absolute dry matter of wood pulp or paper. If silicone is present in an amount exceeding 0.5 ppm, in the case of needing a very high-definition display for a mobile terminal and the like, the parts with circuit disconnection of a color film caused by a trace amount of silicone transferred onto glass may be highly visible because of high definition, and therefore, the display may be judged to be poor in quality. Term "absolute dry" matter in the present invention means a state in which after drying an object to be dried, moisture does not substantially exist in the object. For example, a weight change per hour at room temperature (25°C) of an object in an "absolute dry" state is 1% or less, preferably 0.5% or less, and more preferably 0.1% by less.

In general, silicone is contained in wood pulp in many cases. This may be caused by frequently using a silicone-based defoamer as a defoamer used in order to prevent the reduction of a cleansing ability due to generation of foam during a process of manufacturing wood pulp, and in particular, during a cleansing process. Silicone originated from the silicone-based defoamer mentioned above remains in pulp. A silicone-based defoamer is produced by, for example, mixing a modified silicone, a surfactant and the like in a mixture of a silicone oil and a hydrophobic silica.

Therefore, in order that after application of a colorant or a color former to a surface of wood pulp for glass plate-interleaving paper an amount of non-pigmented or non-colored discontinuous regions having a diameter of 30 µm or more existing on the surface of the wood pulp is set to the amount of 1000 or less regions per 1000 m², and/or after a colorant or a color former is applied to a surface of hand-made paper having a thickness of 230 µm and manufactured from the aforementioned wood pulp by a method in conformity with JIS P 8222, an amount of non-pigmented or non-colored discontinuous regions having a diameter of 30 µm or more existing on the surface of the hand-made paper is set to the amount of 50 or less regions per 1000 m², and/or after application of a colorant or a color former to a surface of glass plate-interleaving paper of the present invention, an amount of non-pigmented or non-colored discontinuous regions having a diameter of 30 µm or more existing on the surface of the interleaving paper is set to the amount of 15 or less regions per 1000 m², it is particularly important that wood pulp as a raw material of interleaving paper does not contain a large amount of silicone. In the first to third modes of the present invention, means for reducing a content of silicone in wood pulp as a raw material of interleaving paper is not particularly limited. A non-silicone-based defoamer is preferably used as a defoamer used during the manufacture of wood pulp.

Examples of a non-silicone-based defoamer include, for example, an inorganic oil-based defoamer, a higher alcohol-based defoamer, a fatty acid-based defoamer, a fatty acid ester-based defoamer, an amide-based defoamer, an amine-based defoamer, a phosphoric ester-based defoamer, a metallic soap-based defoamer, a sulfonic ester-based defoamer, a polyether-based defoamer, and a plant oil-based defoamer.

Examples of an inorganic oil-based defoamer include, for example, an inorganic oil such as a hydrocarbon oil or the like, an inorganic wax, and the like.

Examples of a higher alcohol-based defoamer include, for example, octyl alcohol, hexadecyl alcohol, and the like.

Examples of a fatty acid-based defoamer include, for example, palmitic acid, oleic acid, stearic acid, and the like.

Examples of a fatty acid ester-based defoamer include, for example, isoamyl stearate, glycerol monolicinolate, sorbitol monolaurate, sorbitol trioleate, and the like.

Examples of an amide-based defoamer include, for example, acrylate polyamine and the like.

Examples of an amine-based defoamer include, for example, diallylamine and the like.

Examples of a phosphoric ester-based defoamer include, for example, tributyl phosphate, sodium octylphosphate, and the like.

Examples of a metallic soap-based defoamer include, for example, aluminum stearate, calcium stearate, potassium oleate, and the like.

Examples of a sulfonic ester-based defoamer include, for example, sodium laurylsulfonate, sodium dodecylsulfonate, and the like.

Examples of a polyether-based defoamer include, for example, a polyoxyalkylene such as a (poly)oxyethylene (poly)oxypropylene adduct, or the like; a (poly)oxyalkylene alkyl ether such as diethylene glycol heptyl ether, polyoxyethylene oleyl ether, polyoxypropylene butyl ether, polyoxyethylene polyoxypropylene 2-ethylhexyl ether, an oxyethylene oxypropylene adduct to a higher alcohol having 8 or more carbon atoms or a secondary alcohol having 12 to 14 carbon atoms, or the like; a (poly)oxyalkylene (alkyl) aryl ether such as polyoxypropylene phenyl ether, polyoxyethylene nonyl phenyl ether or the like; an acetylene ether obtained by subjecting an acetylene alcohol such as 2,4,7,9-tetramethyl-5-decyne-4,7-diol, 2,5-dimethyl-3-hexyne-2,5-diol, 3-methyl-1-butyne-3-ol or the like to alkylene oxide-addition polymerization; a (poly)oxyalkylene fatty acid ester such as diethylene glycol oleic ester, diethylene glycol lauric ester, ethylene glycol distearic ester or the like; a (poly)oxyalkylene sorbitan fatty acid ester such as polyoxyethylene sorbitan monolaurate, polyoxyethylene sorbitan trioleate, or the like; a (poly)oxyalkylene alkyl (aryl) ether sulfuric ester salt such as sodium polyoxypropylene methyl ether sulfate, sodium polyoxyethylene dodecyl phenol ether sulfate or the like; a (poly)oxyalkylene alkyl phosphoric ester such as (poly)oxyethylene stearyl phosphoric ester or the like; a (poly)oxyalkylene alkylamine such as polyoxyethylene laurylamine or the like; polyoxyalkylene amide and the like.

Examples of a plant oil-based defoamer include, for example, plant oils such as soybean oil, corn oil, coconut oil, linseed oil, rape seed oil, cotton seed oil, sesame oil, castor oil and the like.

In addition, a non-silicone-based defoamer can include inorganic particles such as hydrophobic silica and the like. As a hydrophobic silica, a hydrophobically treated silica obtained by replacing a silanol group of a hydrophilic silica with an alkyl group such as a methyl group is preferably used.

A non-silicone-based defoamer can also contain a surfactant and the like, if necessary. Therefore, a non-silicone-based defoamer may be in the form of an emulsion.

In wood pulp for glass plate-interleaving paper of the present invention, (1) after application of a colorant or a color former to a surface of the wood pulp, non-pigmented or non-colored discontinuous regions having a diameter of 30 µm or more exist on the surface of the wood pulp in an amount of 1000 or less regions per 1000 m², or (2) after a colorant or a color former is applied to a surface of hand-made paper having a thickness of 230 µm and manufactured using the wood pulp by a method in conformity with JIS P 8222, non-pigmented or non-colored discontinuous regions having a diameter of 30 µm or more exist on the surface of the hand-made paper in an amount of 50 or less regions per 1000 m², and both characteristics mentioned above are preferably exhibited. That is, the pulp for glass plate-interleaving paper of the present invention preferably possesses both characteristics as follows: (1) after application of a colorant or a color former to a surface of wood pulp, non-pigmented or non-colored discontinuous regions having a diameter of 30 µm or more exist on the surface of the aforementioned wood pulp in an amount of 1000 or less regions per 1000 m², preferably 500 or less regions per 1000 m², more preferably 300 or less regions per 1000 m², even more preferably 150 or less regions per 1000 m², and even more preferably 130 or less regions per 1000 m²; as well as, (2) after a colorant or a color former is applied to a surface of hand-made paper having a thickness of 230 µm and manufactured from the aforementioned wood pulp by a method in conformity with JIS P 8222, non-pigmented or non-colored discontinuous regions having a diameter of 30 µm or more exist on the surface of the aforementioned hand-made paper in an amount of 50 or less regions per 1000 m², preferably 30 or less regions per 1000 m², more preferably 20 or less regions per 1000 m², and even more preferably 10 or less regions per 1000 m². Thereby, the number of regions having a diameter of 30 µm or more of hydrophobic substances such as silicone existing on the surface of the glass plate-interleaving paper formed from the wood pulp of the present invention can be easily set to 15 or less regions per 1000 m².

Wood pulp usable in the present invention is wood pulp such as nadelholz bleached kraft pulp (NBKP), laubholz bleached kraft pulp (LBKP), nadelholz bleached sulfite pulp (NBSP), laubholz bleached sulfite pulp (LBSP), thermomechanical pulp (TMP) or the like, alone or in combination thereof. Non-wood pulp formed from marijuana, bamboo, straw, kenaf, paper mulberry, paper birch, cotton or the like, modified pulp such as cationated pulp, mercerized pulp or the like, synthetic fiber or chemical fiber such as rayon, vinylon, nylon, acryl, polyester or the like, or microfibrillated pulp can be blended alone or in combination thereof into the aforementioned wood pulp as a main component. However, if a large amount of a resin component is contained in pulp, the resin component mentioned above may exhibit an adverse effect such as contamination of the surfaces of glass plates or the like. For this reason, chemical pulp with a reduced amount of a resin component as possible, such as nadelholz bleached kraft pulp, is preferably used alone. In addition, high yield pulp such as ground wood pulp contains a large amount of a resin component, and therefore, this is not preferable. When synthetic fiber or chemical fiber is mixed together therewith, a cutting property is improved and an operation property during forming interleaving paper into a flat plate form is improved. However, it should be noted that the recycling property in view of treatment of waste is impaired in this case.

In addition, an adhesive, an antifungal agent, various loading materials for making paper, a wet paper-strengthening agent, a dry paper-strengthening agent, a sizing agent, a coloring agent, a fixing agent, a yield improver, slime controller, and the like may be added to fiber for making paper which contains the aforementioned wood pulp as a main component, within a scope which does not impair the performance of the present invention, if necessary. Subsequently, the mixture can be subjected to making paper by means of a conventionally known Fourdrinier paper machine, cylinder paper machine, tanmo machine, combination between a Fourdrinier paper machine and a cylinder paper machine, or the like. It requires scrupulous care to prevent contamination of insects or contaminants during addition of the aforementioned chemicals.

If beating of pulp is carried out, when the wood pulp of the present invention is manufactured, an effect of increasing strength between paper layers can be expected. However, if due to carrying out beating of pulp, microfiber in the wood pulp increases, paper powder may be generated during use as interleaving paper. For this reason, increasing the beating degree to a more than necessary degree is not preferable. Therefore, a preferable beating degree in the present invention ranges from 300 to 650 ml c.s.f.

Glass plate-interleaving paper, and in particular, glass plate-interleaving paper of the present invention can be obtained by using wood pulp of the present invention in accordance with a conventional method. During and/or after manufacture of glass plate-interleaving paper, a processing treatment such as a calender treatment, a super calender treatment, a softnip calender treatment, an emboss treatment or the like may be carried out. By carrying out a processing treatment, a surface property or the thickness can be adjusted.

A thickness of the aforementioned glass plate-interleaving paper of the present invention preferably ranges from 0.01 to 0.4 mm, more preferably ranges from 0.05 to 0.2 mm, and even more preferably ranges from 0.06 to 0.13 mm.

A basis weight of the aforementioned glass plate-interleaving paper of the present invention preferably ranges from 20 to 200 g/m², more preferably ranges from 25 to 100 g/m², and even more preferably ranges from 30 to 80 g/m².

In glass plate-interleaving paper of the present invention, after application of a colorant or a color former to a surface thereof, non-pigmented or non-colored discontinuous regions having a diameter of 30 µm or more existing on the surface are in an amount of 15 or less regions per 1000 m². Therefore, the glass plate-interleaving paper of the present invention includes, of course, interleaving paper after a colorant or a color former is applied thereto, but also includes interleaving paper before application of a colorant or a color former to a surface thereof, in which in the case of applying a colorant or a color former to a surface thereof, non-pigmented or non-colored discontinuous regions having a diameter of 30 µm or more will exist on the surface in an amount of 15 or less regions per 1000 m².

Interleaving paper obtained from the wood pulp of the present invention, and in particular, glass plate-interleaving paper of the present invention is used by being inserted between glass plates. For example, the aforementioned glass plate-interleaving paper is typically inserted between two glass plates, and a plurality of glass plates with the glass plate-interleaving paper inserted form a laminate as a whole. The laminate mentioned above is to be stored and transported. In addition, interleaving paper formed from the wood pulp of the present invention, and in particular, the glass plate-interleaving paper of the present invention may be used for packaging a single glass plate or the laminate of glass plates mentioned above. Therefore, the present invention possesses an aspect of a method for protecting glass plates containing a step of arranging (in particular, inserting) the aforementioned glass plate-interleaving paper between glass plates.

The glass plates are not particularly limited, but are preferably glass plates for flat panel displays such as plasma display panels, liquid crystal display panels (in particular, TFT liquid crystal display panels), organic EL display panels and the like. Microelectrodes, bulkheads and the like are formed on the surface of the glass plates for flat panel displays. By using glass plate-interleaving paper formed from wood pulp of the present invention, and in particular, glass plate-interleaving paper of the present invention, the transfer of silicone to glass plates can be controlled or inhibited. For this reason, even if microelectrodes, bulkheads and the like are formed on the surface of the glass plates, problems caused by silicone can be controlled and inhibited. As a result, defects of displays can be controlled and inhibited.

In particular, in accordance with the increased size of displays, the size and weight of the glass plates for flat panel displays have increased. The glass plate-interleaving paper formed from the wood pulp of the present invention, and in particular, glass plate-interleaving paper of the present invention can protect the surface of such glass plates with a large size and a large weight. In particular, the glass plate-interleaving paper formed from the wood pulp of the present invention, and in particular, glass plate-interleaving paper of the present invention has a greatly reduced number of dotted regions of hydrophobic substances such as silicone. For this reason, even if pressure is exerted on interleaving paper by glass plates with a large weight, the transfer of hydrophobic substances such as silicone to glass plates can be controlled and inhibited. Therefore, glass plate-interleaving paper formed from the wood pulp of the present invention, and in particular, glass plate-interleaving paper of the present invention can be suitably used for glass plates for flat panel displays in which cleanliness of the surface is particularly required.

In addition, the present invention relates to an inspection method of glass plate-interleaving paper or wood pulp for glass plate-interleaving paper. The inspection method of glass plate-interleaving paper or wood pulp for glass plate-interleaving paper according to the present invention includes the steps of:
applying a colorant or a color former to wood pulp for glass plate-interleaving paper or to glass plate-interleaving paper;
counting the number of non-pigmented or non-colored discontinuous regions having a diameter of 30 µm or more which exist on the surface of the wood pulp or the paper after the aforementioned application;
determining a rate of existence of the non-pigmented or non-colored discontinuous regions, based on the number of the non-pigmented or non-colored discontinuous regions and a surface area of wood pulp for glass plate-interleaving paper or a surface area of the glass plate-interleaving paper; and
screening wood pulp for glass plate-interleaving paper in which the rate of existence of the non-pigmented or non-colored discontinuous regions is 1000 or less regions per 1000 m², preferably 500 or less regions per 1000 m², more preferably 300 or less regions per 1000 m², even more preferably 150 or less regions per 1000 m², and even more preferably 130 or less regions per 1000 m², or screening glass plate-interleaving paper in which the rate of existence of said non-pigmented or non-colored discontinuous regions is 15 or less regions per 1000 m², preferably 12 or less regions per 1000 m², more preferably 10 or less regions per 1000 m², and even more preferably 8 or less regions per 1000 m².

The step of applying a colorant or a color former to wood pulp for glass plate-interleaving paper or to glass plate-interleaving paper can be carried out by, for example, applying a composition such as a solution or a dispersion containing a colorant or a color former to the pulp or the interleaving paper, or alternatively, immersing the pulp or the interleaving paper into a composition such as a solution or a dispersion containing a colorant or a color former. It is preferable that an aqueous solution of an aqueous dye be applied to the pulp or the interleaving paper. After the aforementioned application or immersion, the pulp or the interleaving paper is preferably dried. A concentration of a colorant or a color former in the composition is not particularly limited, and preferably ranges from 0.001 to 20% by weight, more preferably ranges from 0.01 to 10% by weight, and even more preferably ranges from 0.1 to 1% by weight.

The step of counting the number of non-pigmented or non-colored discontinuous regions having a diameter of 30 µm or more which exist on the surface of the wood pulp or the paper after the aforementioned application can be carried out by visual inspection since the non-pigmented or non-colored regions and the pigmented or colored regions can be identified by existence or non-existence of coloration or by, for example, existence or non-existence of coloration at the time of irradiation of electromagnetic waves. The counting step is preferably carried out by automatic measurement of an image of the surface of the glass plate-interleaving paper or the wood pulp for glass plate-interleaving paper obtained by an optical instrument.

In the step of determining a rate of existence of the non-pigmented or non-colored discontinuous regions, based on the number of the non-pigmented or non-colored discontinuous regions and a surface area of wood pulp for glass plate-interleaving paper or a surface area of the glass plate-interleaving paper, if the aforementioned number and the aforementioned surface area are known, a rate of existence of the non-pigmented or non-colored discontinuous regions per unit area (for example, 1000 regions per 1000 m², or 15 regions per 1000 m²) can be accurately determined.

The step of screening wood pulp for glass plate-interleaving paper in which the rate of existence of the non-pigmented or non-colored discontinuous regions is 1000 or less regions per 1000 m², or screening glass plate-interleaving paper in which the rate of existence of said non-pigmented or non-colored discontinuous regions is 15 or less regions per 1000 m², can be carried out by, for example, manually or automatically screening the wood pulp for glass plate-interleaving paper or the glass plate-interleaving paper which meets the previously determined criteria for the 1000 or less regions per 1000 m², or the 15 or less regions per 1000 m².

In the case of screening glass plate-interleaving paper before the aforementioned colorant or color former is applied thereto, in accordance with the aforementioned criteria, if, for example, a part of interleaving paper obtained from the wood pulp having the same lot as that of the wood pulp from which the interleaving paper to be screened is produced is subjected to the aforementioned application, measurement, and determination steps, and then meets the aforementioned criteria, all parts of the interleaving paper produced from the wood pulp having the same lot are ascribed to also meeting the aforementioned criteria, and thereby, they can be determined as passing screening.

In accordance with the inspection method of the present invention, the existence of hydrophobic substances such as silicone on the surface of glass plate-leaving paper or inspection paper prepared from wood pulp for glass plate-interleaving paper can be visually confirmed. For this reason, the inspection method of the present invention can be easily carried out.

### EXAMPLES

Hereinafter, the present invention is described in detail with reference to Examples and Comparative Examples. It should be understood that the scope of the present invention is not limited to these Examples.

### Method for Transfer Test to Glass Plates (Transportation Test)

Urethane foam was placed on a glass mount face on an L-shaped mount frame made of aluminum at an angle of 75 degrees. 120 glass plates, each glass plate having a size of 680 mm x 880 mm x 0.7 mm with glass plate-interleaving paper inserted between every glass plate, were set against a back face which vertically extended from a rear end part of a mount face for vertically mounting glass plates, so that the glass plates were set parallel to the back face. The glass plates were fixed thereon by means of a strip-shaped belt which was fixed to the mount frame, along the whole periphery from the rear end part to the back face. The mount frame to which glass plates had been set as described above was completely covered with a packaging material in order to prevent contamination of dust and the like from the outside. Subsequently, a transportation test by truck was carried out. The test was carried out under the transportation conditions of 1,000 km of transportation distance (stored for 5 days under conditions of 40°C x 95% RH during transportation).

### Example 1: Manufacture of Wood Pulp

In an apparatus for manufacturing nadelholz bleached kraft pulp, including a digesting process, a cleansing process, an oxygen delignification reaction process, and a multistage bleaching process with chlorine dioxide and hydrogen peroxide, an appropriate amount of an undiluted solution of "Pronal A 5044" (manufactured by TOHO Chemical Industry Co., Ltd.) of an inorganic oil-based defoamer which was a non-silicone-based defoamer was continuously added as a defoamer in a cleansing solution of a drum washer immediately after knots were removed after the digesting process. In addition, an appropriate amount of "Pronal A 5044" was added as a defoamer to be added in a wash press in the press cleansing process. In addition, in the cleansing process, cleansing with a mixed solvent of toluene and methanol and filtration were carried out, and repeated 5 times. As described above, nadelholz bleached kraft pulp A was obtained using a non-silicone-based defoamer during the manufacturing processes. The nadelholz bleached kraft pulp A was formed into a pulp sheet having a thickness of 1.2 mm and a basis weight of 700 g/m², in accordance with a conventional method.

On the surface of nadelholz bleached kraft pulp A obtained above, an aqueous solution containing 1% by weight of direct dye "Levacell First Black G" (manufactured by Blanco for Japan, Co., Ltd.) was applied. Subsequently, observation thereof by means of a microscope was carried out. As a result, a rate of existence of the non-pigmented discontinuous regions having a diameter of 30 µm or more was 74 regions per 1000 m².

### Example 2: Manufacture of Wood Pulp

Nadelholz bleached kraft pulp A was obtained in the same manner as described in Example 1.

Hand-made paper having a thickness of 230 µm was prepared by a method in conformity with JIS P 8222 using the aforementioned nadelholz bleached kraft pulp A as a raw material. On the surface of the hand-made paper obtained above, an aqueous solution containing 1% by weight of direct dye "Levacell First Black G" (manufactured by Blanco for Japan, Co., Ltd.) was applied. Subsequently, observation thereof by means of a microscope was carried out. As a result, a rate of existence of the non-pigmented discontinuous regions having a diameter of 30 µm or more was 10 regions per 1000 m².

### Comparative Example 1: Manufacture of Wood Pulp

In addition, nadelholz bleached kraft pulp B was obtained in the same manner as described in Examples 1 and 2, with the exception that "SN defoamer 551K" (manufactured by SAN NOPCO Limited), which is a silicone-based defoamer, as a defoamer was used, and the cleansing process with a solvent was not carried out. The nadelholz bleached kraft pulp B was formed into a pulp sheet having a thickness of 1.2 mm and a basis weight of 700 g/m², in accordance with a conventional method.

On the surface of nadelholz bleached kraft pulp B obtained above, an aqueous solution containing 1% by weight of direct dye "Levacell First Black G" (manufactured by Blanco for Japan, Co., Ltd.) was applied. Subsequently, observation by means of a microscope thereof was carried out. As a result, a rate of existence of the non-pigmented discontinuous regions having a diameter of 30 µm or more was 1260 regions per 1000 m².

In addition, hand-made paper having a thickness of 230 µm was prepared by a method in conformity with JIS P 8222 using the aforementioned nadelholz bleached kraft pulp B as a raw material. On the surface of the hand-made paper obtained above, an aqueous solution containing 1% by weight of direct dye "Levacell First Black G" (manufactured by Blanco for Japan, Co., Ltd.) was applied. Subsequently, observation thereof by means of a microscope was carried out. As a result, a rate of existence of the non-pigmented discontinuous regions having a diameter of 30 µm or more was 56 regions per 1000 m².

### Example 3: Manufacture of Glass Plate-Interleaving Paper

As wood pulp, nadelholz bleached kraft pulp A of Example 1 in an amount of 100 parts by weight was prepared, and disaggregated to prepare a slurry having a beating degree of 520 ml c.s.f. Polyacrylamide (product name: Polystron 1250, manufactured by Arakawa Chemical Industries Ltd.) was added as a paper-strengthening agent in an amount of 0.5 parts by mass with respect to the total pulp mass. Thereby, a pulp slurry with a 0.4% concentration was prepared. The obtained pulp slurry was subjected to paper making by means of a Fourdrinier paper machine. Thereby, glass plate-interleaving paper having a base weight of 50 g/m² and a thickness of 0.093 mm was obtained.

On the surface of the obtained glass plate-interleaving paper, an aqueous solution containing 1% by weight of direct dye "Levacell First Black G" (manufactured by Blanco for Japan, Co., Ltd.) was applied. Subsequently, observation thereof by means of a microscope was carried out. As a result, a rate of existence of the non-pigmented discontinuous regions having a diameter of 30 µm or more was 4 regions per 1000 m².

### Example 4: Manufacture of Glass Plate-Interleaving Paper

Glass plate-interleaving paper having a base weight of 30 g/m² and a thickness of 0.054 mm was obtained in the same manner as described in Example 3.

On the surface of the obtained glass plate-interleaving paper, an aqueous solution containing 1% by weight of direct dye "Levacell First Black G" (manufactured by Blanco for Japan, Co., Ltd.) was applied. Subsequently, observation thereof by means of a microscope was carried out. As a result, a rate of existence of the non-pigmented discontinuous regions having a diameter of 30 µm or more was 4 regions per 1000 m².

### Example 5: Manufacture of Glass Plate-Interleaving Paper

Glass plate-interleaving paper having a base weight of 80 g/m² and a thickness of 0.125 mm was obtained in the same manner as described in Example 3.

On the surface of the obtained glass plate-interleaving paper, an aqueous solution containing 1% by weight of direct dye "Levacell First Black G" (manufactured by Blanco for Japan, Co., Ltd.) was applied. Subsequently, observation thereof by means of a microscope was carried out. As a result, a rate of existence of the non-pigmented discontinuous regions having a diameter of 30 µm or more was 7 regions per 1000 m².

### Comparative Example 2: Manufacture of Glass Plate-Interleaving Paper

Glass plate-interleaving paper having a base weight of 50 g/m² was obtained in the same manner as described in Example 3, with the exception of using 100 parts by mass of nadelholz bleached kraft pulp B of Comparative Example 1, as wood pulp.

On the surface of the obtained glass plate-interleaving paper, an aqueous solution containing 1% by weight of direct dye "Levacell First Black G" (manufactured by Blanco for Japan, Co., Ltd.) was applied. Subsequently, observation thereof by means of a microscope was carried out. As a result, a rate of existence of the non-pigmented discontinuous regions having a diameter of 30 µm or more was 18 regions per 1000 m².

As a result of confirming the transfer of the glass plate-interleaving paper obtained in each of the Examples 3 to 5 and Comparative Example 2 to the glass plates in the transportation test, disconnection of color film was not observed when an array formation of a liquid crystal panel was carried out using the glass plates between which the interleaving paper according to each of Examples 3 to 5 had been used. On the other hand, when an array formation of a liquid crystal panel was carried out using the glass plates between which the interleaving paper according to Comparative Example 2 had been used, disconnection of color film was observed.

## Claims

1. Wood pulp for glass plate-interleaving paper wherein after application of a colorant or a color former to a surface of wood pulp, non-pigmented or non-colored discontinuous regions having a diameter of 30 µm or more exist on the surface of said wood pulp in an amount of 1000 or less regions per 1000 m², preferably 500 or less regions per 1000 m², more preferably 300 or less regions per 1000 m², even more preferably 150 or less regions per 1000 m², and even more preferably 130 or less regions per 1000 m².

2. Wood pulp for glass plate-interleaving paper wherein after a colorant or a color former is applied to a surface of hand-made paper having a thickness of 230 µm and manufactured from said wood pulp by a method in conformity with JIS P 8222, non-pigmented or non-colored discontinuous regions having a diameter of 30 µm or more exist on the surface of said hand-made paper in an amount of 50 or less regions per 1000 m², preferably 30 or less regions per 1000 m², more preferably 20 or less regions per 1000 m², and even more preferably 10 or less regions per 1000 m².

3. The wood pulp for glass plate-interleaving paper according to claim 1 or 2, wherein the colorant is an aqueous dye.

4. The wood pulp for glass plate-interleaving paper according to any one of claims 1 to 3, wherein said discontinuous regions comprise hydrophobic substances.

5. The wood pulp for glass plate-interleaving paper according to claim 4, wherein said hydrophobic substances comprise silicone, preferably a silicone oil, and more preferably a dimethylpolysiloxane.

6. The wood pulp for glass plate-interleaving paper according to any one of claims 1 to 5, wherein said glass plate is for use in a display, preferably for a TFT liquid crystal display or an organic EL display.

7. Glass plate-interleaving paper comprising the wood pulp for glass plate-interleaving paper recited in any one of claims 1 to 6.

8. Use of the wood pulp for glass plate-interleaving paper recited in any one of claims 1 to 6, for the manufacture of glass plate-interleaving paper.

9. Glass plate-interleaving paper the raw material of which is wood pulp, wherein after application of a colorant or a color former to a surface of said interleaving paper, non-pigmented or non-colored discontinuous regions having a diameter of 30 µm or more exist on the surface of said interleaving paper in an amount of 15 or less regions per 1000 m², preferably 12 or less regions per 1000 m², more preferably 10 or less regions per 1000 m², and even more preferably 8 or less regions per 1000 m².

10. The glass plate-interleaving paper according to claim 9, wherein said colorant is an aqueous dye.

11. The glass plate-interleaving paper according to claim 9 or 10, wherein said discontinuous regions comprise hydrophobic substances.

12. The glass plate-interleaving paper according to claim 11, wherein said hydrophobic substances comprise silicone, preferably a silicone oil, and more preferably a dimethylpolysiloxane.

13. The glass plate-interleaving paper according to any one of claims 9 to 12, wherein said glass plate is for use in a display, preferably for a TFT liquid crystal display or an organic EL display.

14. A laminate comprising glass plates and the glass plate-interleaving paper as recited in any one of claims 9 to 13.

15. A method for protecting glass plates comprising a step of arranging the glass plate-interleaving paper as recited in any one of claims 9 to 13 between the glass plates.

16. An inspection method of glass plate-interleaving paper or wood pulp for glass plate-interleaving paper, comprising the steps of:
applying a colorant or a color former to wood pulp for glass plate-interleaving paper or to glass plate-interleaving paper;
counting the number of non-pigmented or non-colored discontinuous regions having a diameter of 30 µm or more which exist on the surface of said wood pulp or said paper after said application;
determining a rate of existence of said non-pigmented or non-colored discontinuous regions, based on said number of said non-pigmented or non-colored discontinuous regions and a surface area of wood pulp for glass plate-interleaving paper or a surface area of said glass plate-interleaving paper; and
screening wood pulp for glass plate-interleaving paper in which said rate of existence of said non-pigmented or non-colored discontinuous regions is 1000 or less regions per 1000 m², preferably 500 or less regions per 1000 m², more preferably 300 or less regions per 1000 m², even more preferably 150 or less regions per 1000 m², and even more preferably 130 or less regions per 1000 m², or screening glass plate-interleaving paper in which said rate of existence of said non-pigmented or non-colored discontinuous regions is 15 or less regions per 1000 m², preferably 12 or less regions per 1000 m², more preferably 10 or less regions per 1000 m², and even more preferably 8 or less regions per 1000 m².
